# EUROPÄISCHE PATENTSCHRIFT

(11) **EP 2 772 305 B1**
(45) Veröffentlichungstag und Bekanntmachung des Hinweises auf die Patenterteilung: **20.09.2017**
(21) Anmeldenummer: 13157020.2
(22) Anmeldetag: 27.02.2013
(51) Int. Cl.: B01J 19/00, B01J 4/00, B01J 19/24, C08G 69/16

(54) **POLYMERISATIONSVORRICHTUNG UND VERFAHREN ZUR HERSTELLUNG VON THERMOPLASTISCHEN POLYMEREN**
POLYMERISATION DEVICE AND METHOD AND DEVICE FOR PRODUCING THERMOPLASTIC POLYMERS
DISPOSITIF DE POLYMÉRISATION ET PROCÉDÉ DE FABRICATION DE POLYMÈRES THERMOPLASTIQUES

(43) Veröffentlichungstag der Anmeldung: 03.09.2014
(73) Patentinhaber: Uhde Inventa-Fischer GmbH, 13509 Berlin (DE)
(72) Erfinder: Siebecke, Ekkehard, 10825 Berlin (DE); Bär, Mirko, 16547 Birkenwerder (DE); Königsmann, Bernd, 15518 Langewahl (DE)
(74) Vertreter: Pfenning, Meinig & Partner mbB

(56) Entgegenhaltungen:
- WO-A1-97/08223
- WO-A1-98/29185
- WO-A1-2006/001113
- WO-A1-2013/073595
- DE-A1- 19 506 407

## Beschreibung

Die vorliegende Erfindung betrifft eine Polymerisationsvorrichtung zur Herstellung von Schmelzen von thermoplastischen Polymeren, bei denen die Wärme des ausgetragenen Produktes rückgewonnen und zur Vorwärmung der einsetzbaren Rohstoffe eingesetzt werden kann. Zudem betrifft die vorliegende Erfindung ein entsprechendes Verfahren zur Herstellung von thermoplastischen Polymeren.

Aus dem Stand der Technik ist bekannt, die Abkühlung von Polymerschmelzen vorzunehmen, um ein Anheben der relativen Viskosität zu bewirken. Hierzu wird mittels eines Luftkühlers der Polymerschmelzwärme entzogen und an die Umgebung abgegeben. Die Abwärme geht somit ungenutzt verloren.

Aus EP2764912 A1 ist eine Vorrichtung zur Polymerisation von Polyamiden bekannt wobei ein Prepolymerisationsreaktor mit Wärmetauschelementen über eine Rohleitung mit Wärmetauschelement mit einem Reaktor in form eines VK-Rohrs verbunden ist. Diese Wärmetauschelemente sind mit einem Wärmeträgerfluid durchströmbar und in Reihe geschaltet. Aufgabenstellung ist die Entwicklung einer konstruktiven Lösung für die Rückführung der Wärmemengen aus dem Schmelzkühler des Polymerisationsreaktors in den Polymerisationsprozess. Dabei soll ein separater Wärmetauscher vermieden werden, die Temperatur soll aber dauerhaft sicher unterhalb der Zulauftemperatur des Wärmeträgeröls zum Schmelzkühler im Polymerisationsreaktor liegen.

Diese Aufgabe wird bezüglich einer Polymerisationsvorrichtung mit den Merkmalen des Patentanspruchs 1, bezüglich eines Verfahrens zur Herstellung von thermoplastischen Polymeren durch die Merkmale des Patentanspruchs 17 gelöst. Die jeweiligen abhängigen Patentansprüche stellen dabei vorteilhafte Weiterbildung dar.

Erfindungsgemäß wird somit eine Polymerisationsvorrichtung angegeben, die
a) mindestens einen ein- oder mehrstufig ausgeführten Polymerisationsreaktor (1),
b) dem mindestens einen Polymerisationsreaktor (1) vorgeschaltet mindestens ein Mischbehälter (3), sowie
c) mindestens eine Rohrleitung (2), die einen Auslass (3b) des mindestens einen Mischbehälters (3) mit einem Einlass (1a) des mindestens einen Polymerisationsreaktor verbindet,
umfasst, wobei der mindestens eine Polymerisationsreaktor (1), der mindestens eine Mischbehälter (3) und die mindestens eine Rohrleitung (2) jeweils mindestens ein Wärmetauscherelement (1c, 2c, 3c) umfassen, wobei das mindestens eine Wärmetauscherelement (1c) des mindestens einen Polymerisationsreaktors, das mindestens eine Wärmetauscherelement (2c) der Rohrleitung (2) und das mindestens eine Wärmetauscherelement (3c) des Mischbehälters (3) mit einem Wärmetauscherfluid durchströmbar und in Reihe geschaltet sind.

Bei der erfindungsgemäßen Polymerisationsvorrichtung ist somit vorgesehen, dass jeder der essentiellen Bestandteile, also der Polymerisationsreaktor, der Mischbehälter sowie die Rohrleitung, die den Mischbehälter mit dem Polymerisationsreaktor verbindet, ein Wärmetauscherelement umfasst. Dabei sind die einzelnen Wärmetauscherelemente in Reihe geschaltet und können mit einem Wärmetauscherfluid durchströmbar sein. Insbesondere durchströmt dabei das Wärmetauscherfluid die einzelnen Wärmetauscherelemente in Richtung ausgehend vom Polymerisationsreaktor über die Rohrleitung hin zum Wärmetauscherelement des Mischbehälters.

Mit dieser Kaskade von Wärmetauscherelmenten ist eine Rückgewinnung der thermischen Energie der im Polymerisationsreaktor als Produkt anfallenden Polymerschmelze möglich. Durch das Wärmetauscherfluid kann der im Polymerisationsreaktor anfallenden Polymerschmelze thermische Energie entzogen und an die dem Polymerisationsreaktor zuzuführenden Substanzen übertragen werden.

Im Mischbehälter kann beispielsweise eine Vorlage der Monomeren bzw. Oligomeren, aus denen das thermoplastische Polymer im Polymerisationsreaktor hergestellt werden soll, erfolgen. Im Mischbehälter können gleichzeitig weitere Stoffe wie beispielsweise Additive, Katalysatoren etc. den Monomeren bzw. Oligomeren zugegeben werden.

Diese Edukte werden über die Rohrleitung dem Polymerisationsreaktor zugeführt. Durch Rückgewinnung der thermischen Energie, die in den geschmolzenen polymeren Materialien enthalten ist über das Wärmetauscherfluid kann somit bereits eine partielle Erwärmung der Eduktmaterialien auf dem Weg zum Polymerisationsreaktor erfolgen.

Der Vorteil liegt in der Kosten- und Aufstellungsplatzeinsparung im Vergleich zu Lösungen mit separaten Wärmetauschern. Die Wärme aus dem Polymerisationsreaktor wird komplett wieder dem Prozess zugeführt, es ist keine zusätzliche Ausrüstung notwendig, die Rohrleitung für Frisch-Caprolactam sind standardmäßig mit einem Doppelmantel versehen, der auch für die Beheizung mit Wärmeträgeröl geeignet ist. Die Verschmutzungsneigung dieser Erfindung ist geringer als bei den meisten üblichen Wärmetauschertypen. Der Wirkungsgrad der Aufheizung im Doppelrohr ist relativ hoch, da hohe Strömungsgeschwindigkeiten im Innenrohr und im Mantel erreicht werden. Die Temperatur des Wärmeträgeröls kann sicher unter den für die Polymerkühlung notwendigen Wert reduziert werden, so dass mit einer einfachen Feed-/Bleed-Regelung die benötigte Temperatur des Wärmeträgeröls eingestellt werden kann.

Die Wärmetauscherelemente, die in den oben genannten essentiellen Bestandteilen der Polymerisationsvorrichtung ausgeführt sind, können dabei auf beliebige Art und Weise gebildet sein. Insbesondere kommen beispielsweise aus dem Stand der Technik bekannte Wärmetauscherelemente zum Einsatz.

Gemäß bevorzugten Ausführungsformen der Erfindung ist es vorgesehen, dass das Wärmetauscherelement (2c) der Rohrleitung (2) durch einen doppelwandigen Rohraufbau (Rohr mit Doppelmantel) der Rohrleitung (2) realisiert ist.

Insbesondere ist es vorteilhaft, wenn der Mischbehälter (3) einen Mantel aufweist, der das Wärmetauscherelement (3c) darstellt.

Zudem kann das Wärmetauscherfluid in einem geschlossenen Kreislauf geführt werden. Hierzu ist beispielsweise vorgesehen, dass das Wärmetauscherelement (3c) des Mischbehälters (3) über eine Rohrleitung (31) mit dem Wärmetauscherelement (1c) des Polymerisationsreaktors (1) verbunden ist.

Weiterhin ist es möglich, dass bereits die Zuführung der Edukte zum Mischbehälter temperiert wird. Dies kann beispielsweise dadurch realisiert werden, dass der Mischbehälter (3) mindestens einen Einlass (3a) aufweist, der mit einer Rohrleitung (4) versorgt wird, die mindestens ein Wärmetauscherelement (4c) aufweist.

Auch hier ist es bevorzugt, wenn das Wärmetauscherelement (4c) der Rohrleitung, mit der die Edukte dem Mischbehälter zugeführt werden können, einen doppelwandigen Aufbau aufweist.

Diesbezüglich kann weiter vorgesehen sein, dass das mindestens eine Wärmetauscherelement (4c) der Rohrleitung (4) mit dem Wärmetauscherelement (3c) des Mischbehälters (3) in Reihe geschaltet ist, d.h. dass beispielsweise das Wärmetauscherfluid nach Durchlaufen des Mischbehälters in das Wärmetauscherelement (4c) der Rohrleitung (4) eingespeist wird.

Eine weitere Ausführungsform sieht vor, dass das Wärmetauscherfluid wie voran beschrieben im Kreislauf geführt wird, wobei weiter vorgesehen ist, dass das Wärmetauscherelement (4c) der Zuleitung (4) für den Mischbehälter an diesen Kreislauf angeschlossen ist. Dies kann beispielsweise dadurch erfolgen, dass das Wärmetauscherelement (3c) des Mischbehälters (3) über ein Dreiwegeventil (31a) mit der Rohrleitung (31) und dem Wärmetauscherelement (4c) der Rohrleitung (4) in Verbindung steht. Alternativ können an Stelle des Dreiwegeventils auch zwei Zweiwegeventile oder andere geeignete Ventilvorrichtung zur Steuerung der Teilströme vorhanden sein.

Auch der Rücklauf von in das Wärmetauscherelement (4c) der Zuleitung (4) für den Mischbehälter (3) eingespeiste Wärmetauscherfluid kann in den Kreislauf rückgeführt werden. Hierzu kann vorgesehen sein, dass das Wärmetauscherelement (4c) der Rohrleitung (4) über eine Rohrleitung (431) mit der Rohrleitung (31) in Verbindung steht.

Gemäß den zuvor beschriebenen Ausführungsformen entstehen somit zwei Kreisläufe für das Wärmetauscherfluid, die miteinander gekoppelt werden können: Ein erster Kreislauf führt das Wärmetauscherfluid vom Mischbehälter zurück zum Polymerisationsreaktor, der zweite Kreislauf führt das Wärmetauscherfluid über die Zuleitung für den Mischbehälter. Beide Kreisläufe können erneut zusammengeführt werden, sodass beide Wärmetauscherfluidströme - der in die Rückführungsleitung zum Polymerisationsreaktor eingespeiste Strom sowie der über die Zuleitung für den Mischbehälter geführte Wärmetauscherfluidstrom - über einen gemeinsamen Strang zurück zum Polymerisationsreaktor geführt werden können.

Über das 3-Wege-Ventil kann beispielsweise eine Aufteilung der Wärmetauscherfluidströme vorgenommen werden. Dies kann insbesondere temperaturgesteuert erfolgen, hierzu kann vorgesehen sein, dass in der Verbindungsleitung (die Rohrleitung, die das Wärmetauscherfluid von der Zuleitung zum Mischbehälter zurück in die Verbindungsleitung zwischen Mischbehälter und Polymerisationsreaktor führt) einen Temperatursensor umfasst. Der Temperatursensor kann zur Steuerung des zuvor beschriebenen 3-Wege-Ventils ausgeführt sein.

Ferner ist es vorteilhaft, wenn die Rohrleitung (31) mindestens eine Pumpe (5) zur Förderung des Wärmetauscherfluids umfasst.

Zur Temperierung des im Kreislauf geführten Wärmetauscherfluids kann ferner vorgesehen sein, dass die Rohrleitung, die das Wärmetauscherelement des Mischbehälters mit dem Wärmetauscherelement des Polymerisationsreaktors verbindet, mindestens einen Zulauf und mindestens einen Ablauf aufweist. Über den Ablauf kann aus der Rohrleitung Wärmetauscherfluid entnommen, über den Ablauf der Rohrleitung speziell temperiertes Wärmetauscherfluid zugeführt werden. Die Temperatur sowie die Menge des zugeführten Wärmetauscherfluids können definiert eingestellt werden, sodass nach dem Zulauf ein definiert temperierter Wärmetauscherfluidstrom vorhanden ist und weiter dem Wärmetauscherelement des Polymerisationsreaktors zugeführt werden kann. Bevorzugt ist dabei der Ablauf in Durchströmungsrichtung der Rohrleitung weiter stromabwärts, verglichen mit dem Zulauf angeordnet.

Weiter ist es bevorzugt, wenn die Rohrleitung (31) und/oder die Polymerisationsvorrichtung über mindestens einen Temperatursensor (TC) zur Bestimmung der Temperatur des Wärmetauscherfluids in der Rohrleitung (31) und/oder des Inhalts des Polymerisationsreaktors (1) aufweist.

Über den bzw. die Temperatursensoren kann beispielsweise die Menge bzw. die Temperatur des über den Zulauf zugeführten Wärmetauscherfluidstroms reguliert werden und somit letztendlich die Temperatur der aus dem Polymerisationsreaktor ausgetragenen Polymerschmelze eingestellt werden. Hierüber kann ebenso die Menge der rückgewonnenen thermischen Energie eingestellt werden.

Insbesondere ist es hierbei vorteilhaft, wenn der Zulauf (6) und/oder der Ablauf (7) ein Steuerventil (6a) umfasst, über das die Menge des über den Zulauf (6) in die Rohrleitung (31) zugeführten Wärmeträgerfluids und/oder die Menge des über den Ablauf (7) aus der Rohrleitung (31) abgeführten Wärmeträgerfluids geregelt werden kann.

Insbesondere wird das Steuerventil (6a) durch den mindestens einen Temperatursensor (TC) reguliert.

Die Rohrleitung, die Edukte zum Mischbehälter führt, kann ebenso über eine temperierte Zufuhr versorgt werden.

Die Erfindung betrifft ferner ein Verfahren zur Herstellung von thermoplastischen Polymeren durch Polymerisation oder Polykondensation, bevorzugt von Polyamiden, insbesondere Polyamid 6 oder Copolyamide, enthaltend Polyamid 6 Einheiten mit einer Polymerisationsvorrichtung nach einem der vorhergehenden Ansprüche, bei dem
a) zu polymerisierendes oder zu polykondensierendes Material in einen Mischbehälter (3) eingetragen und ggf. mit weiteren zuzumischenden Substanzen vermischt wird,
b) das Material oder Materialgemisch über die Rohrleitung (2) der Polymerisationsvorrichtung (1) zugeführt und dort zum thermoplastischen Polymer polymerisiert bzw. polykondensiert wird,
c) das thermoplastische Polymer über das Wärmetauscherelement (1c) abgekühlt wird, wobei das im Wärmetauscherelement (1c) geführte Wärmetauschermedium erwärmt wird, und
d) und im Anschluss als Schmelze aus dem Polymerisationsreaktor (1) über den Auslass (1b) ausgetragen wird,
wobei das im Wärmetauscherelement (1c) erwärmte Wärmetauscherfluid durch das Wärmetauscherelement (2c) der Rohrleitung (2) und im Anschluss durch das Wärmetauscherelement (3c) des Mischbehälters (3) geführt wird, wobei das in der Rohrleitung (2) und dem Mischbehälter (3) geführte bzw. beinhaltete Material oder Materialgemisch temperiert, insbesondere erwärmt wird.

Insbesondere ist es beim erfindungsgemäßen Verfahren vorteilhaft, wenn das Wärmetauscherfluid im Wärmetauscherelement (2c) der Rohrleitung (2) im Gegenstrom zur Strömungsrichtung des Materials oder des Materialgemischs geführt wird.
Das Wärmetauscherfluid kann nach Durchlaufen des Wärmetauscherelements (3c) des Mischbehälters (3)
a) in eine Rohrleitung (31) eingespeist und dem Wärmetauscherelement (1c) zugeführt und dadurch im Kreislauf geführt, und/oder
b) in das Wärmetauscherelement (4c) der Rohrleitung (4) eingespeist und im Gegenstrom zu in der Rohrleitung (4) geführtem Material geführt werden.

Vorzugsweise kann ferner vorgesehen sein, dass die Einspeisung des Wärmetauscherfluids Rohrleitung (31) und/oder in das Wärmetauscherelement (4c) über das Dreiwegeventil (31a) erfolgt, wobei die Steuerung der Volumenverteilung des in die Rohrleitung (31) und/oder das Wärmetauscherelement (4c) eingespeisten Anteils des Wärmetauscherfluids temperaturgeregelt über einen Temperatursensor (TC) erfolgt.

Insbesondere ist beim erfindungsgemäßen Verfahren bevorzugt, wenn der Rohrleitung (31) über den Auslass (7) warmes Wärmetauscherfluid entnommen und über die Zufuhr (6) kühles Wärmetauscherfluid zugeführt wird, wobei die Menge des ab- bzw. zugeführten Wärmetauscherfluids bevorzugt über ein Regelventil (6a) gesteuert wird, wobei das Regelventil (6a) insbesondere über eine Temperaturregelung (TC) gesteuert wird.

Die vorliegende Erfindung wird anhand der nachfolgenden Figur näher erläutert, ohne die Figur jedoch auf die speziell dargestellte Ausführungsform zu beschränken.

Die Polymerisation von Caprolactam zu Polyamid 6 (auch bei der Polymerisation von Polyamid 6 mit Co-Polymeren) erfolgt einem 1- oder mehrstufigen Prozess. Die letzte Prozessstufe ist die Abkühlung der PolyamidSchmelze zur Anhebung der relativen Viskosität. Aus Gründen der Energieeinsparung wird die Energie, die der Polymerschmelze im letzten Reaktor entzogen wird genutzt, um das Rohmaterial der Polymerisation vorzuheizen. So wird diese Energie komplett rückgewonnen.

In der Regel wird die Schmelzkühlung des Polyamides mittels eines Wärmeträgeröls durchgeführt. Dieses wird in Abhängigkeit von der gewünschten Schmelztemperatur im Auslass des Polymerisationsreaktors auf eine konstante Temperatur im Zulauf zum Schmelzkühler eingeregelt. Das Wärmeträgeröl wird im Abstrom des Schmelzkühlers einem Anlagenteil zugeleitet, wo die Wärme verwendet wird (alternativ zu einem Luftkühler), um ein anderes Medium aufzuheizen. Danach kann das Wärmeträgeröl, das eine Temperatur unterhalb des für die Schmelzkühlung benötigten Temperatur aufweist, durch Zumischung von heißem Primär-Wärmeträgeröl wieder auf die benötigte Temperatur gebracht werden. Die Temperatur des Wärmeträgeröls liegt in der Regel zwischen 260 °C im Ausgang des Schmelzkühlers und 230 °C im Zulauf des Schmelzkühlers.

Die Wärme aus dem Wärmeträgeröl wird in der Regel über einen spearaten Wärmetauscher genutzt, um das Rohmaterial Caprolactam oder die Mischung der verschiedenen Rohmaterialien (Caprolactam + Wasser + Additive + Extrakte [optional]) aufzuheizen. Die Beheizung von Caprolactam mit Wärmeträgeröl in einem separaten Wärmetauscher ist problematisch. Die Verwendung eines Rohrbündelwärmetauschers ist nicht zu empfehlen, da durch Polymerisation des Caprolactams einzelne Rohre verstopfen und nach längerer Betriebszeit nur noch wenige Wärmetauscherrohre durchgängig sind. Häufig wird die benötigte Wärmetauscherleistung nicht mehr erreicht. Ähnliche Probleme treten bei der Verwendung von Plattenwärmetauschern und anderen Standard-Formen von Wärmetauschern auf. In der Praxis hat sich die Form des Doppelrohr-Wärmetauschers durchgesetzt, wobei das Caprolactam im Innenrohr fließt und das Wärmeträgerrohr im Mantelrohr im Gegenstrom geführt wird.

Eine Alternative zur Wärmenutzung in einem separaten Wärmetauscher, die bereits vielfach eingesetzt wurde, ist die Beheizung des Heizmantels eines der Polymerisation vorgeschalteten Mischbehälters. In diesem Behälter werden die Rohmaterialien des Polyamids gemischt und aufgewärmt. Die Betriebstemperatur in diesem Mischbehälter liegt unterhalb der Wärmeträgeröltemperatur nach dem Schmelzkühler. So kann die Wärme in diesen Behälter abgegeben werden.

Diese Lösung ist für Polymerisationsanlagen mit kleiner Kapazität ausreichend, bereitet aber bei Anlagengrößen oberhalb von 100 t/Tag Probleme, da die Wärmeüberträgerfläche des Heizmantels nicht ausreichend ist, um die komplette Wärmemenge abzuführen.

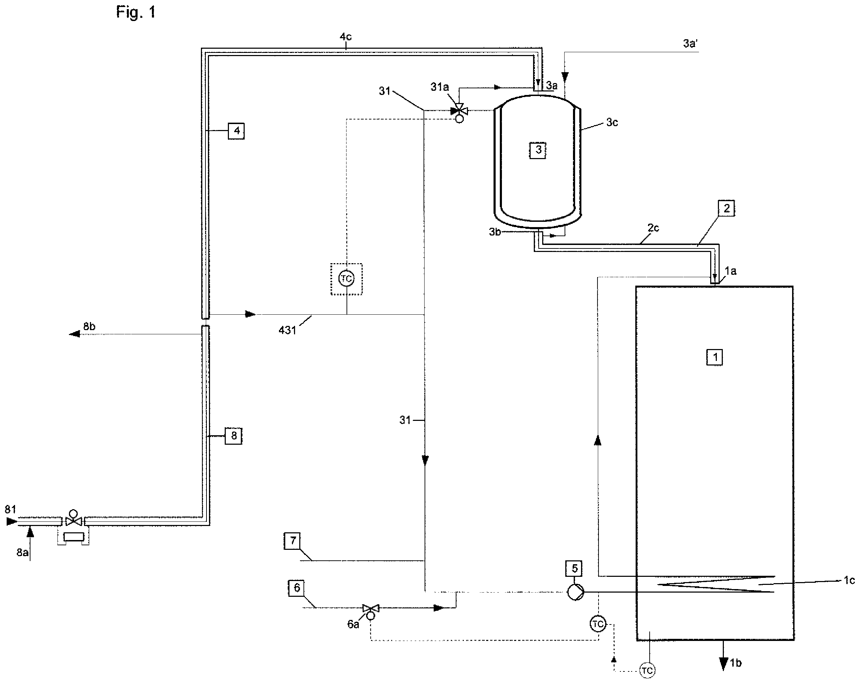

In Figur 1 ist eine erfindungsgemäße Polymerisationsvorrichtung dargestellt, die einen Polymerisationsreaktor 1, ein Mischbehälter 3 sowie den Polymerisationsreaktor 1 und den Mischbehälter 3 verbindende Rohrleitung 2 umfasst. Der Mischbehälter verfügt über einen Einlass 3a, mit dem monomeres Material, beispielsweise ε-Caprolactam in den Mischbehälter 3 aufgegeben werden kann. Zudem kann über einen weiteren Zulauf 3a' weiteres Material, beispielsweise Wasser, Katalysatoren, Additive oder Extrakte in den Mischbehälter aufgegeben werden. Der Mischbehälter kann beispielsweise über mechanische Vorrichtungen zur Durchmischung bzw. Durchmengung der aufgegebenen Materialien, beispielsweise Rühreinrichtungen etc. umfassen. Das im Mischbehälter 3 erzeugte Gemisch kann über den Auslass 3b des Mischbehälters 3 in eine Rohrleitung 2 aufgegeben und dort in den Polymerisationsreaktor 1 aufgegeben werden. Der Polymerisationsreaktor 1 kann einstufig oder mehrstufig, beispielsweise zweistufig ausgebildet sein. Im Falle einer zweistufigen Ausbildung kann der Polymerisationsreaktor 1 dabei beispielsweise eine Vorpolymerisationsstufe sowie eine Nachkondensationsstufe umfassen. Im Polymerisationsreaktor wird das aus dem Mischbehälter 3 zugeführte Gemisch polymerisiert. Das Gemisch wird dem Polymerisationsreaktor 1 über den Einlauf 1a zugeführt. Das fertige Produkt, d.h. die Schmelze eines thermoplastischen Polymers, beispielsweise eine Polyamid-6-Schmelze wird dem Polymerisationsreaktor 1 über den Auslass 1b entnommen. Wesentlich für die vorliegende Erfindung ist nunmehr, dass sowohl der Polymerisationsreaktor 1, die Rohrleitung 2 als auch der Mischbehälter 3 Wärmetauscherelemente 1c, 2c bzw. 3c aufweisen. Das Wärmetauscherelement 1c des Polymerisationsreaktors 1 kann dabei beispielsweise als Röhrenwärmetauscher ausgebildet sein, der insbesondere im Auslassbereich des Polymerisationsreaktors, d.h. in der Nähe des Auslasses 1b ausgebildet ist. Ein derartiger Bereich des Polymerisationsreaktors 1 kann als Polymer-Cooling-Zone bezeichnet werden. Das Wärmetauscherelement 2c der Rohrleitung 2 ist insbesondere durch einen doppelwandigen Aufbau des Rohres 2 ausgebildet, dabei ist die eigentliche Rohrleitung 2, mit der das Gemisch aus dem Mischbehälter 3 in den Polymerisationsreaktor 1 geführt werden kann, die innere Rohrleitung. Das Wärmetauscherelement 2c bildet somit eine Ummantelung der Rohrleitung 2. Das Wärmetauscherelement 3c des Mischbehälters ist insbesondere als Ummantelung bzw. doppelte Wandung des Mischbehälters 3 ausgeführt. Sämtliche Wärmetauscherelemente 1c, 2c und 3c stehen dabei in fluidischer Kommunikation und können sukzessive, d.h. nacheinander von einem Wärmetauscherfluid durchströmt werden. Vorzugsweise wird das Wärmetauscherfluid dabei gegen die Strömungsrichtung der Produktmaterialien geführt, d.h. vom Wärmetauscherelement 1c des Polymerisationsreaktors 1 über das Wärmetauscherelement 2c der Rohrleitung 2 hin zum Wärmetauscherelement 3c des Mischbehälters 3. Mit dieser Vorrichtung kann der fertigen Polymerschmelze vor dem Austrag aus dem Polymerisationsreaktor 1 thermische Energie entzogen werden und in die Eduktmaterialien, die über die Rohrleitung 2 aus dem Mischbehälter 3, dem Polymerisationsreaktor 1 zugeführt werden, eingetragen werden. Damit kann eine Rückgewinnung der thermischen Energie ohne großen apparativen Aufwand bewerkstelligt werden.

Gemäß der Ausführung nach Figur 1 wird das Wärmetauscherfluid im Kreislauf geführt. Hierzu ist eine Rohrleitung 31 vorgesehen, mit der das Wärmetauscherfluid nach Durchlaufen des Wärmetauscherelementes 3c des Mischbehälters 3 in das Wärmetauscherelement 1c des Polymerisationsreaktors 1 rückgeführt werden kann. Zur Förderung des Wärmetauscherfluids ist in der Rohrleitung 31 eine Pumpe 5 vorgesehen.

Eine weitere Möglichkeit sieht vor, dass bereits die Rohrleitung 4, mit der Eduktmaterialien, beispielsweise ε-Caprolactam dem Mischbehälter 3 zugeführt werden, mit einem Wärmetauscher 4c versehen ist. Dieses Wärmetauscherelement 4c kann ebenso als doppelwandiger Rohraufbau der Rohrleitung 4 ausgestaltet sein, wobei die Eduktmaterialien wiederum in der inneren Rohrleitung und das Wärmetauscherfluid in der Ummantelung dieser Rohrleitung 4 geführt werden. Das Wärmetauscherfluid wird im Wärmetauscherelement 4c der Rohrleitung 4 ebenso im Gegenstrom zur in der Rohrleitung 4 geführten Monomeren geführt. Dabei ist das Wärmetauscherelement 4c der Rohrleitung 4 dem Wärmetauscherelement 3c des Mischbehälters 3 nachgeschaltet.

Das Wärmetauscherelement 4c kann an den Kreislauf 31 des Wärmetauscherfluids angegliedert sein. Hierzu kann beispielsweise ein 3-Wege-Ventil 31a vorgesehen sein, mit dem eine Verteilung des Wärmetauscherfluidstroms auf den Kreislauf 31 bzw. das Wärmetauscher 4c der Rohrleitung 4 gesteuert werden kann. Zur Rückführung des Wärmetauscherfluids aus dem Wärmetauscherelement 4c der Rohrleitung 4 in den Kreislauf 31 kann eine weitere Rohrleitung 431 vorgesehen sein. Zur Steuerung der Verteilung des Wärmetauscherfluids auf den Kreislauf 31 bzw. des Wärmetauscherelement 4c mittels des 3-Wege-Ventils 31a kann ebenso ein Temperatursensor TC in die Rohrleitung 431 eingebracht sein. Somit ist eine genaue Temperierung der Eduktmaterialien bereits in der Rohrleitung 4 möglich, indem über das 3-Wege-Ventil eine vordefinierte Menge an Wärmeträgerfluid in die Rohrleitung 4 aufgegeben wird.

Die Rohrleitung 4 kann ihrerseits über eine weitere Zufuhr 8 versorgt werden, die ebenso eine temperierbare Ummantelung aufweisen kann. Hierzu ist ein Einlass 8a sowie eine Abführung 8b eines temperierenden Fluids, beispielsweise heißes Wasser vorgesehen. Die Eduktmaterialien, beispielsweise ε-Caprolactam wird über eine Zufuhr 81 in die Rohrleitung 8 eingespeist.

Ferner kann der Kreislauf 31 über einen Ablauf 7 sowie einen Zulauf 6 für das Wärmetauscherfluid, das im Kreislauf 31 geführt wird, verfügen. Der Zulauf 6 kann beispielsweise über ein steuerbares Ventil 6a geregelt werden. Das über den Zulauf 6 den Kreislauf 31 zugeführte Wärmeträgerfluid kann auf eine bestimmte Temperatur vortemperiert werden. Mittels eines oder mehrerer weiterer Temperatursensoren TC, die beispielsweise die Temperatur der ausgetragenen thermoplastischen Polymerschmelze bzw. des Wärmeträgerfluids in den Kreislauf 31 vor Eingang in das Wärmetauscherelement 1c des Polymerisationsreaktors 1 bestimmt werden kann, kann zudem das Ventil 6a und somit die Menge bzw. die Temperatur des zugeführten Wärmeträgerfluids geregelt werden und somit die Temperatur eingestellt werden, mit der das Wärmetauscherfluid das Wärmetauscherelement 1c durchströmt.

## Patentansprüche

1. Polymerisationsvorrichtung, umfassend
a) mindestens einen ein- oder mehrstufig ausgeführten Polymerisationsreaktor (1),
b) dem mindestens einen Polymerisationsreaktor (1) vorgeschaltet mindestens ein Mischbehälter (3), sowie
c) mindestens eine Rohrleitung (2), die einen Auslass (3b) des mindestens einen Mischbehälters (3) mit einem Einlass (1a) des mindestens einen Polymerisationsreaktor verbindet,
**dadurch gekennzeichnet, dass** der mindestens eine Polymerisationsreaktor (1), der mindestens eine Mischbehälter (3) und die mindestens eine Rohrleitung (2) jeweils mindestens ein Wärmetauscherelement (1c, 2c, 3c) umfassen, wobei das mindestens eine Wärmetauscherelement (1c) des mindestens einen Polymerisationsreaktors, das mindestens eine Wärmetauscherelement (2c) der Rohrleitung (2) und das mindestens eine Wärmetauscherelement (3c) des Mischbehälters (3) mit einem Wärmetauscherfluid durchströmbar und in Reihe geschaltet sind.

2. Polymerisationsvorrichtung nach Anspruch 1, **dadurch gekennzeichnet, dass** das Wärmetauscherelement (2c) der Rohrleitung (2) durch einen doppelwandigen Rohraufbau der Rohrleitung (2) realisiert ist.

3. Polymerisationsvorrichtung nach einem der vorhergehenden Ansprüche, **dadurch gekennzeichnet, dass** der Mischbehälter (3) einen Mantel aufweist, der das Wärmetauscherelement (3c) darstellt.

4. Polymerisationsvorrichtung nach einem der vorhergehenden Ansprüche, **dadurch gekennzeichnet, dass** das Wärmetauscherfluid in einem Kreislauf geführt wird, indem das Wärmetauscherelement (3c) des Mischbehälters (3) über eine Rohrleitung (31) mit dem Wärmetauscherelement (1c) des Polymerisationsreaktors (1) verbunden ist.

5. Polymerisationsvorrichtung nach einem der vorhergehenden Ansprüche, **dadurch gekennzeichnet, dass** der Mischbehälter (3) mindestens einen Einlass (3a) aufweist, der mit einer Rohrleitung (4) versorgt wird, die mindestens ein Wärmetauscherelement (4c) aufweist.

6. Polymerisationsvorrichtung nach vorhergehendem Anspruch, **dadurch gekennzeichnet, dass** das Wärmetauscherelement (4c) der Rohrleitung (4) durch einen doppelwandigen Rohraufbau der Rohrleitung (4) realisiert ist.

7. Polymerisationsvorrichtung nach einem der beiden vorhergehenden Ansprüche, **dadurch gekennzeichnet, dass** mindestens eine Wärmetauscherelement (4c) der Rohrleitung (4) mit dem Wärmetauscherelement (3c) des Mischbehälters (3) in Reihe geschaltet ist.

8. Polymerisationsvorrichtung nach einem der Ansprüche 4 bis 6, **dadurch gekennzeichnet, dass** das Wärmetauscherelement (3c) des Mischbehälters (3) über ein Dreiwegeventil (31a) oder zwei Zweiwegeventile mit der Rohrleitung (31) und dem Wärmetauscherelement (4c) der Rohrleitung (4) in Verbindung steht,

9. Polymerisationsvorrichtung nach einem der Ansprüche 4 bis 8, **dadurch gekennzeichnet, dass** das Wärmetauscherelement (4c) der Rohrleitung (4) über eine Rohrleitung (431) mit der Rohrleitung (31) in Verbindung steht.

10. Polymerisationsvorrichtung nach vorhergehendem Anspruch, **dadurch gekennzeichnet, dass** die Rohrleitung (431) einen Temperatursensor (TC) umfasst, der zur Steuerung des Dreiwegeventils (31a) dient.

11. Polymerisationsvorrichtung nach einem der Ansprüche 4 bis 10, **dadurch gekennzeichnet, dass** die Rohrleitung (31) mindestens eine Pumpe (5) zur Förderung des Wärmetauscherfluids umfasst.

12. Polymerisationsvorrichtung nach einem der Ansprüche 4 bis 11, **dadurch gekennzeichnet, dass** die Rohrleitung (31) mindestens einen Zulauf (6) und mindestens einen Ablauf (7) für ein Wärmetauscherfluid aufweist.

13. Polymerisationsvorrichtung nach einem der Ansprüche 4 bis 12, **dadurch gekennzeichnet, dass** die Rohrleitung (31) und/oder die Polymerisationsvorrichtung über mindestens einen Temperatursensor (TC) zur Bestimmung der Temperatur des Wärmetauscherfluids in der Rohrleitung (31) und/oder des Inhalts des Polymerisationsreaktors (1).

14. Polymerisationsvorrichtung nach einem der Ansprüche 12 bis 13, **dadurch gekennzeichnet, dass** der Zulauf (6) und/oder der Ablauf (7) ein Steuerventil (6a) umfasst, über das die Menge des über den Zulauf (6) in die Rohrleitung (31) zugeführten Wärmeträgerfluids und/oder die Menge des über den Ablauf (7) aus der Rohrleitung (31) abgeführten Wärmeträgerfluids geregelt werden kann.

15. Polymerisationsvorrichtung nach einem der beiden vorhergehenden Ansprüche, **dadurch gekennzeichnet, dass** das Steuerventil (6a) durch den mindestens einen Temperatursensor (TC) reguliert wird.

16. Polymerisationsvorrichtung nach einem der Ansprüche 5 bis 15, **dadurch gekennzeichnet, dass** die Rohrleitung (4) über eine temperierte Zufuhr (8) versorgt wird.

17. Verfahren zur Herstellung von thermoplastischen Polymeren durch Polymerisation oder Polykondensation, bevorzugt von Polyamiden, insbesondere Polyamid 6 oder Copolyamide, enthaltend Polyamid 6 Einheiten mit einer Polymerisationsvorrichtung nach einem der vorhergehenden Ansprüche, bei dem
a) zu polymerisierendes oder zu polykondensierendes Material in einen Mischbehälter (3) eingetragen und ggf. mit weiteren zuzumischenden Substanzen vermischt wird,
b) das Material oder Materialgemisch über die Rohrleitung (2) der Polymerisationsvorrichtung (1) zugeführt und dort zum thermoplastischen Polymer polymerisiert bzw. polykondensiert wird,
c) das thermoplastische Polymer über das Wärmetauscherelement (1c) abgekühlt wird, wobei das im Wärmetauscherelement (1c) geführte Wärmetauschermedium erwärmt wird, und
d) und im Anschluss als Schmelze aus dem Polymerisationsreaktor (1) über den Auslass (1b) ausgetragen wird,
wobei das im Wärmetauscherelement (1c) erwärmte Wärmetauscherfluid durch das Wärmetauscherelement (2c) der Rohrleitung (2) und im Anschluss durch das Wärmetauscherelement (3c) des Mischbehälters (3) geführt wird, wobei das in der Rohrleitung (2) und dem Mischbehälter (3) geführte bzw. beinhaltete Material oder Materialgemisch temperiert, insbesondere erwärmt wird.

18. Verfahren nach vorhergehendem Anspruch, **dadurch gekennzeichnet, dass** das Wärmetauscherfluid im Wärmetauscherelement (2c) der Rohrleitung (2) im Gegenstrom zur Strömungsrichtung des Materials oder des Materialgemischs geführt wird.

19. Verfahren nach einem der beiden vorhergehenden Ansprüche, **dadurch gekennzeichnet, dass** das Wärmetauscherfluid nach Durchlaufen des Wärmetauscherelements (3c) des Mischbehälters (3)
a) in eine Rohrleitung (31) eingespeist und dem Wärmetauscherelement (1c) zugeführt und dadurch im Kreislauf geführt wird, und/oder
b) in das Wärmetauscherelement (4c) der Rohrleitung (4) eingespeist und im Gegenstrom zu in der Rohrleitung (4) geführtem Material geführt wird.

20. Verfahren nach vorhergehendem Anspruch, **dadurch gekennzeichnet, dass** die Einspeisung des Wärmetauscherfluids Rohrleitung (31) und/oder in das Wärmetauscherelement (4c) über das Dreiwegeventil (31a) erfolgt, wobei die Steuerung der Volumenverteilung des in die Rohrleitung (31) und/oder das Wärmetauscherelement (4c) eingespeisten Anteils des Wärmetauscherfluids temperaturgeregelt über einen Temperatursensor (TC) erfolgt.

21. Verfahren nach einem der Ansprüche 17 bis 20, **dadurch gekennzeichnet, dass** der Rohrleitung (31) über den Auslass (7) warmes Wärmetauscherfluid entnommen und über die Zufuhr (6) kühles Wärmetauscherfluid zugeführt wird, wobei die Menge des ab- bzw. zugeführten Wärmetauscherfluids bevorzugt über ein Regelventil (6a) gesteuert wird, wobei das Regelventil (6a) insbesondere über eine Temperaturregelung (TC) gesteuert wird.

## Claims

1. Polymerisation device, comprising
a) at least one polymerisation reactor (1) of a one- or multistep configuration,
b) at least one mixing container (3), connected in front of the at least one polymerisation reactor (1), and also
c) at least one pipeline (2) which connects an outlet (3b) of the at least one mixing container (3) to an inlet (1a) of the at least one polymerisation reactor,
**characterised in that** the at least one polymerisation reactor (1), the at least one mixing container (3) and the at least one pipeline (2) respectively comprise at least one heat exchanger element (1c, 2c, 3c), the at least one heat exchanger element (1c) of the at least one polymerisation reactor, the at least one heat exchanger element (2c) of the pipeline (2) and the at least one heat exchanger element (3c) of the mixing container (3) being able to be flowed through by a heat exchanger fluid and being connected in series.

2. Polymerisation device according to claim 1, **characterised in that** the heat exchanger element (2c) of the pipeline (2) is implemented as double-walled pipe construction of the pipeline (2).

3. Polymerisation device according to one of the preceding claims, **characterised in that** the mixing container (3) has a jacket which represents the heat exchanger element (3c).

4. Polymerisation device according to one of the preceding claims, **characterised in that** the heat exchanger fluid is recirculated, by the heat exchanger element (3c) of the mixing container (3) being connected via a pipeline (31) to the heat exchanger element (1c) of the polymerisation reactor (1).

5. Polymerisation device according to one of the preceding claims, **characterised in that** the mixing container (3) has at least one inlet (3a) which is supplied by a pipeline (4) having at least one heat exchanger element (4c).

6. Polymerisation device according to the preceding claim, **characterised in that** the heat exchanger element (4c) of the pipeline (4) is implemented as double-walled pipe construction of the pipeline (4).

7. Polymerisation device according to one of the two preceding claims, **characterised in that** at least one heat exchanger element (4c) of the pipeline (4) is connected in series to the heat exchanger element (3c) of the mixing container (3).

8. Polymerisation device according to one of the claims 4 to 6, **characterised in that** the heat exchanger element (3c) of the mixing container (3) is connected via a three-way valve (31a) or two two-way valves to the pipeline (31) and to the heat exchanger element (4c) of the pipeline (4).

9. Polymerisation device according to one of the claims 4 to 8, **characterised in that** the heat exchanger element (4c) of the pipeline (4) is connected via a pipeline (431) to the pipeline (31).

10. Polymerisation device according to the preceding claim, **characterised in that** the pipeline (431) comprises a temperature sensor (TC) which serves for controlling the three-way valve (31a).

11. Polymerisation device according to one of the claims 4 to 10, **characterised in that** the pipeline (31) comprises at least one pump (5) for conveying the heat exchanger fluid.

12. Polymerisation device according to one of the claims 4 to 11, **characterised in that** the pipeline (31) has at least one inflow (6) and at least one outflow (7) for a heat exchanger fluid.

13. Polymerisation device according to one of the claims 4 to 12, **characterised in that** the pipeline (31) and/or the polymerisation device has at least one temperature sensor (TC) for determining the temperature of the heat exchanger fluid in the pipeline (31) and/or of the content of the polymerisation reactor (1).

14. Polymerisation device according to one of the claims 12 to 13, **characterised in that** the inflow (6) and/or the outflow (7) comprises a control valve (6a), via which the quantity of the heat transfer fluid supplied via the inflow (6) into the pipeline (31) and/or the quantity of the heat transfer fluid discharged via the outflow (7) from the pipeline (31) can be regulated.

15. Polymerisation device according to one of the two preceding claims, **characterised in that** the control valve (6a) is regulated by the at least one temperature sensor (TC).

16. Polymerisation device according to one of the claims 5 to 15, **characterised in that** the pipeline (4) is supplied via a temperature-controlled supply (8).

17. Method for the production of thermoplastic polymers by polymerisation or polycondensation, preferably of polyamides, in particular polyamide 6 or copolyamides, comprising polyamide 6 units, with a polymerisation device according to one of the preceding claims, in which
a) material to be polymerised or to be polycondensed is fed into a mixing container (3) and optionally mixed with further substances to be mixed in,
b) the material or material mixture is supplied via the pipeline (2) to the polymerisation device (1) and is polymerised or polycondensed there to form the thermoplastic polymer,
c) the thermoplastic polymer is cooled via the heat exchanger element (1c), the heat exchanger medium guided in the heat exchanger element (1c) being heated, and
d) and subsequently is discharged as melt out of the polymerisation reactor (1) via the outlet (1b),
the heat exchanger fluid heated in the heat exchanger element (1c) being guided through the heat exchanger element (2c) of the pipeline (2) and subsequently through the heat exchanger element (3c) of the mixing container (3), the material or material mixture guided or contained in the pipeline (2) and in the mixing container (3) being temperature-controlled, in particular heated.

18. Method according to the preceding claim, **characterised in that** the heat exchanger fluid in the heat exchanger element (2c) of the pipeline (2) is guided in counterflow to the flow direction of the material or of the material mixture.

19. Method according to one of the two preceding claims, **characterised in that** the heat exchanger fluid, after passing through the heat exchanger element (3c) of the mixing container (3),
a) is fed into a pipeline (31) and supplied to the heat exchanger element (1c) and consequently is recirculated, and/or
b) is fed into the heat exchanger element (4c) of the pipeline (4) and is guided in counterflow to material guided in the pipeline (4).

20. Method according to the preceding claim, **characterised in that** the feeding of the heat exchanger fluid pipeline (31) and/or into the heat exchanger element (4c) is effected via the three-way valve (31a), control of the volume distribution of the proportion of the heat exchanger fluid fed into the pipeline (31) and/or into the heat exchanger element (4c) being effected temperature controlled via a temperature sensor (TC).

21. Method according to one of the claims 17 to 20, **characterised in that** warm heat exchanger fluid is removed from the pipeline (31) via the outlet (7) and cool heat exchanger fluid is supplied via the supply (6), the quantity of discharged or supplied heat exchanger fluid being controlled preferably via a control valve (6a), the control valve (6a) being controlled in particular via a temperature-control device (TC).

## Revendications

1. Dispositif de polymérisation, comprenant
a) au moins un réacteur de polymérisation (1), réalisé en un ou plusieurs étages,
b) au moins un récipient mélangeur (3), monté en amont de l'au moins un réacteur de polymérisation (1), ainsi que
c) au moins une conduite (2), qui relie un orifice de sortie (3b) de l'au moins un récipient mélangeur (3) à un orifice d'entrée (1a) de l'au moins un réacteur de polymérisation,
**caractérisé en ce que** l'au moins un réacteur de polymérisation (1), l'au moins un récipient mélangeur (3) et l'au moins une conduite (2) comprennent chacun au moins un élément échangeur de chaleur (1c, 2c, 3c), l'au moins un élément échangeur de chaleur (1c) de l'au moins un réacteur de polymérisation, l'au moins un élément échangeur de chaleur (2c) de la conduite (2) et l'au moins un élément échangeur de chaleur (3c) du récipient mélangeur (3) pouvant être parcourus par un fluide échangeur de chaleur et étant montés en série.

2. Dispositif de polymérisation selon la revendication 1, **caractérisé en ce que** l'élément échangeur de chaleur (2c) de la conduite (2) est réalisé par un montage de tubes à double paroi de la conduite (2).

3. Dispositif de polymérisation selon l'une des revendications précédentes, **caractérisé en ce que** le récipient mélangeur (3) présente une chemise qui représente l'élément échangeur de chaleur (3c).

4. Dispositif de polymérisation selon l'une des revendications précédentes, **caractérisé en ce que** le fluide échangeur de chaleur s'écoule en circuit fermé, par le fait que l'élément échangeur de chaleur (3c) du récipient mélangeur (3) est, par une conduite (31), relié à l'élément échangeur de chaleur (1c) du réacteur de polymérisation (1).

5. Dispositif de polymérisation selon l'une des revendications précédentes, **caractérisé en ce que** le récipient mélangeur (3) présente au moins un orifice d'entrée (3a), qui est alimenté par une conduite (4) qui présente au moins un élément échangeur de chaleur (4c).

6. Dispositif de polymérisation selon la revendication précédente, **caractérisé en ce que** l'élément échangeur de chaleur (4c) de la conduite (4) est réalisé par un montage de tubes à double paroi de la conduite (4).

7. Dispositif de polymérisation selon l'une des revendications précédentes, **caractérisé en ce qu'**au moins un élément échangeur de chaleur (4c) de la conduite (4) est monté en série avec l'élément échangeur de chaleur (3c) du récipient mélangeur (3).

8. Dispositif de polymérisation selon l'une des revendications 4 à 6, **caractérisé en ce que** l'élément échangeur de chaleur (3c) du récipient mélangeur (3) est, par l'intermédiaire d'une vanne à trois voies (31a) ou de deux vannes à deux voies, relié à la conduite (31) et à l'élément échangeur de chaleur (4c) de la conduite (4).

9. Dispositif de polymérisation selon l'une des revendications 4 à 8, **caractérisé en ce que** l'élément échangeur de chaleur (4c) de la conduite (4) est par l'intermédiaire d'une conduite (431) relié à la conduite (31).

10. Dispositif de polymérisation selon la revendication précédente, **caractérisé en ce que** la conduite (431) comprend un capteur de température (TC), qui sert à commander la vanne à trois voies (31a).

11. Dispositif de polymérisation selon l'une des revendications 4 à 10, **caractérisé en ce que** la conduite (31) comprend au moins une pompe (5) pour le refoulement du fluide échangeur de chaleur.

12. Dispositif de polymérisation selon l'une des revendications 4 à 11, **caractérisé en ce que** la conduite (31) présente au moins un point d'alimentation (6) et au moins un point d'évacuation (7) pour un fluide échangeur de chaleur.

13. Dispositif de polymérisation selon l'une des revendications 4 à 12, **caractérisé en ce que** la conduite (31) et/ou le dispositif de polymérisation présentent au moins un capteur de température (TC) pour déterminer la température du fluide échangeur de chaleur dans la conduite (31) et/ou du contenu du réacteur de polymérisation (1).

14. Dispositif de polymérisation selon l'une des revendications 12 à 13, **caractérisé en ce que** le point d'alimentation (6) et/ou le point d'évacuation (7) comprennent une vanne de commande (6a), par l'intermédiaire de laquelle il est possible de réguler le débit du fluide caloporteur amené par le point d'alimentation (6) dans la conduite (31) et/ou le débit du fluide caloporteur évacué de la conduite (31) par le point d'évacuation (7).

15. Dispositif de polymérisation selon l'une des deux revendications précédentes, **caractérisé en ce que** la vanne de commande (6a) est régulée par l'au moins un capteur de température (TC).

16. Dispositif de polymérisation selon l'une des revendications 5 à 15, **caractérisé en ce que** la conduite (4) est alimentée par l'intermédiaire d'un point d'alimentation (8) porté à l'équilibre de température.

17. Procédé de fabrication d'un polymère thermoplastique par polymérisation ou polycondensation, de préférence de polyamides, en particulier de polyamide 6 ou de copolyamides, contenant des motifs polyamide 6, avec un dispositif de polymérisation selon l'une des revendications précédentes, dans lequel
a) on introduit dans un récipient mélangeur (3) la matière à polymériser ou à polycondenser, et éventuellement on la mélange à d'autres substances à ajouter,
b) par l'intermédiaire de la conduite (2), on amène la matière ou le mélange de matières au dispositif de polymérisation (1), et on l'y soumet à une polymérisation ou à une polycondensation pour obtenir le polymère thermoplastique,
c) on refroidit le polymère thermoplastique à l'aide de l'élément échangeur de chaleur (1c), le fluide échangeur de chaleur amené dans l'élément échangeur de chaleur (1c) étant chauffé, et
d) puis, sous forme d'une masse fondue, on l'évacue du réacteur de polymérisation (1) par le point d'évacuation (1b),
dans lequel le fluide échangeur de chaleur, chauffé dans l'élément échangeur de chaleur (1c), est envoyé dans l'élément échangeur de chaleur (2c) de la conduite (2), puis dans l'élément échangeur de chaleur (3c) du récipient mélangeur (3), ce à l'occasion de quoi la matière ou le mélange de matières envoyé ou contenu dans la conduite (2) et dans le récipient mélangeur (3) est porté à l'équilibre de température, en particulier est chauffé.

18. Procédé selon la revendication précédente, **caractérisé en ce que** le fluide échangeur de chaleur, dans l'élément échangeur de chaleur (2c) de la conduite (2), s'écoule à contre-courant du sens d'écoulement de la matière ou du mélange de matières.

19. Procédé selon l'une des deux revendications précédentes, **caractérisé en ce que** le fluide échangeur de chaleur, après être passé par l'élément échangeur de chaleur (3c) du récipient mélangeur (3)
a) est injecté dans une conduite (31) et envoyé à l'élément échangeur de chaleur (1c), et de ce fait s'écoule en circuit fermé, et/ou
b) est injecté dans l'élément échangeur de chaleur (4c) de la conduite (4) et s'écoule à contre-courant par rapport à la matière s'écoulant dans la conduite (4).

20. Procédé selon la revendication précédente, **caractérisé en ce que** l'injection du fluide échangeur de chaleur dans la conduite (31) et/ou dans l'élément échangeur de chaleur (4c) s'effectue par l'intermédiaire de la vanne à trois voies (31a), la commande de la répartition en volume de la part du fluide échangeur de chaleur injectée dans la conduite (31) et/ou dans l'élément échangeur de chaleur (4c) étant effectuée, avec régulation de la température, par l'intermédiaire d'un capteur de température (TC).

21. Procédé selon l'une des revendications 17 à 20, **caractérisé en ce que** le fluide échangeur de chaleur chaud est prélevé de la conduite (31) par le point d'évacuation (7) et le fluide échangeur de chaleur froid est amené par le point d'alimentation (6), le débit du fluide échangeur de chaleur évacué ou amené étant de préférence commandé par une vanne de régulation (6a), la vanne de régulation (6a) étant commandée en particulier par une régulation de la température (TC).
